Europäisches Patentamt

European Patent Office

Office européen des brevets

(19)

(11) **EP 0 959 630 B1**

(12) **FASCICULE DE BREVET EUROPEEN**

(45) Date de publication et mention
de la délivrance du brevet:
**23.08.2006 Bulletin 2006/34**

(51) Int Cl.:
***H04N 9/68*** (2006.01)

(21) Numéro de dépôt: **99400956.1**

(22) Date de dépôt: **20.04.1999**

(54) **Dispositif de régulation de l'amplitude du signal chrominance**

Schaltung zum Regulieren der Chrominanzsignalamplitude

Chrominance signal amplitude regulation circuit

(84) Etats contractants désignés:
**DE FR GB IT**

(30) Priorité: **23.04.1998 FR 9805098**

(43) Date de publication de la demande:
**24.11.1999 Bulletin 1999/47**

(73) Titulaire: **STMicroelectronics S.A.**
**92120 Montrouge (FR)**

(72) Inventeurs:
• **Salle, Didier**
**38000 Grenoble (FR)**
• **Bret, Gérard**
**38130 Echirolles (FR)**

(74) Mandataire: **Poulin, Gérard et al**
**BREVALEX**
**3, rue du Docteur Lancereaux**
**75008 Paris (FR)**

(56) Documents cités:
**US-A- 3 943 560** **US-A- 4 635 102**

• **PATENT ABSTRACTS OF JAPAN vol. 95, no. 3,
28 avril 1995 & JP 06 335015 A (MATSUSHITA
ELECTRIC)**

EP 0 959 630 B1

# EP 0 959 630 B1

## Description

<u>Domaine technique</u>

La présente invention concerne un dispositif de régulation de l'amplitude du signal chrominance.

<u>Etat de la technique antérieur</u>

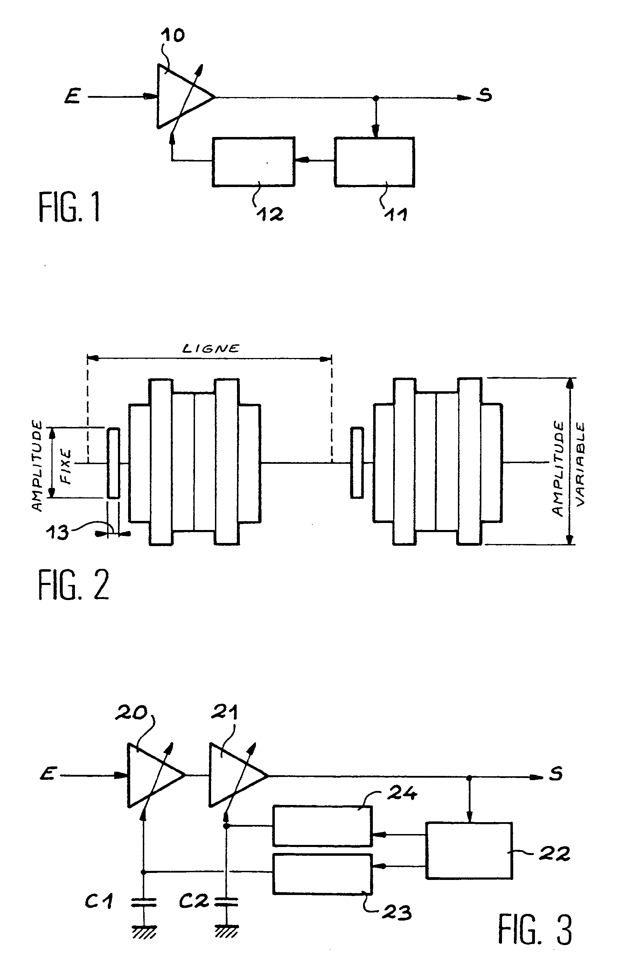

Pour démoduler la sous-porteuse chrominance d'un signal vidéo, il est nécessaire de contrôler au préalable l'amplitude du signal. Cette fonction est réalisée en amplifiant la sous-porteuse E à l'aide d'un amplificateur à gain variable 10 dont le gain est contrôlé par une boucle, comme illustré sur la figure 1. Ce circuit bien connu de l'homme de métier, qui est décrit dans le document référencé [1] en fin de description, comprend donc un tel amplificateur à gain variable 10 dont la sortie, qui est la sortie S de sous-porteuse régulée, est reliée à un circuit de mesure de niveau 11 suivi d'un circuit de filtrage 12 dont la sortie est reliée à la commande de gain de l'amplificateur 10.

Suivant les standards de transmission, les signaux peuvent être modulés en fréquence, ou phase et amplitude. Pour assurer une régulation précise, la mesure et le réglage du gain sont réalisés pendant la transmission d'une salve de référence (« burst ») 13 placée en début de chaque ligne de balayage vidéo, comme illustré sur la figure 2.

Pendant toute la durée de la ligne, le gain de l'amplificateur est conservé à la valeur obtenue à la suite de la phase de régulation de début de ligne. Ce type de boucle régulation est souvent appelée CAG (« Contrôle Automatique de Gain ») ou ACC (« Automatic Colour Control »).

L'amplitude du signal de la ligne qui correspond à la saturation de la couleur est variable suivant le contenu de l'image transmise. De plus, la durée de la salve de référence étant très brève (2 ou 3 microsecondes), cette salve est sujette à des dégradations. La plage de linéarité des démodulateurs étant limitée, il est nécessaire de mettre en place un dispositif réduisant le gain de l'amplificateur en cas de signal trop fort pendant la ligne. Normalement l'amplitude du signal de la ligne ne doit pas être supérieure à 2,6 fois l'amplitude de la salve de référence.

Ce dispositif, destiné à éviter la surcharge du démodulateur et qui est souvent appelé « ACC overload », doit entrer en action uniquement à partir d'un seuil défini en fonction de la norme de transmission des signaux vidéo. Les réalisations les plus courantes d'un tel dispositif font appel à des boucles de régulation analogiques telles que celle illustrée sur la figure 3.

Dans le circuit illustré sur cette figure 3 on a une première boucle comprenant un premier amplificateur à gain variable 20, qui reçoit l'entrée de sous-porteuse E, suivi d'un second amplificateur à gain variable 21 dont la sortie, qui est la sortie S de sous-porteuse régulée, est reliée à un circuit de mesure de niveau 22 dont une première sortie est connectée à un circuit de comparaison de salve 23 dont la sortie est reliée à la commande de gain du premier amplificateur 20, et à un premier condensateur C1 connecté à la masse, et une seconde boucle comprenant ce second amplificateur 21 relié à ce circuit de mesure de niveau 22 dont une seconde sortie est connectée à un circuit de comparaison ligne 24 dont la sortie est reliée à la commande de gain du second amplificateur 21, et à un second condensateur C2 connecté à la masse.

Dans la première boucle l'amplitude du signal est mesurée à la sortie du second amplificateur à gain variable 21 puis comparée à une référence salve. Le signal obtenu est utilisé pour charger ou décharger, suivant le signe de la comparaison, le premier condensateur C1. La commande de gain du premier amplificateur 20 est contrôlée par la tension de ce condensateur C1 qui fait alors office de filtrage de la première boucle. La pratique montre qu'il est nécessaire d'utiliser un condensateur C1 d'assez forte valeur (supérieure au microfarad) pour pouvoir obtenir une constante de temps de l'ordre de 300 à 400 lignes. Le système de charge et décharge doit être réalisé de façon à obtenir une constante de temps plus longue pour la croissance du gain que pour la décroissance.

Dans la seconde boucle (« ACC overload ») on dispose du second condensateur C2 de filtrage ainsi que du second amplificateur à gain variable 21. Là encore les constantes de temps sont très différentes. Il est en effet indispensable de faire décroître le gain au plus vite dès que le niveau de modulation pendant la ligne dépasse le seuil maximum. Le retour au gain normal se fait en revanche, avec une constante de temps très longue de l'ordre de 400 à 1000 lignes.

Un tel circuit présente l'inconvénient de nécessiter deux condensateurs externes C1 et C2 lors de son intégration, et donc deux sorties sur le circuit intégré, ainsi que deux amplificateurs à gain variable 20 et 21.

L'invention a pour objet un dispositif de régulation de l'amplitude d'un signal chrominance ne nécessitant plus ces deux condensateurs de filtrage et ne nécessitant donc plus les deux sorties sur le circuit intégré, et dans lequel on n'utilise qu'un seul amplificateur à gain variable.

<u>Exposé de l'invention</u>

L'invention propose un dispositif de régulation de l'amplitude du signal chrominance comportant un amplificateur à gain variable, recevant en entrée le signal de sous-porteuse et délivrant un signal de sous-porteuse régulée, dont le gain est contrôlé par deux boucles de régulation, la première étant une boucle de régulation pendant la durée de la salve de référence, la second étant une boucle de régulation pendant la ligne visible, caractérisé en ce que chacune de ces boucles comporte un compteur-décompteur piloté par une horloge, et en ce qu'il comporte un convertisseur numérique-analogique piloté par une autre horloge, recevant les signaux de sortie de ces premier et second compteurs-décompteurs, et dont le signal de sortie est relié à la commande de gain de l'amplificateur.

Avantageusement le convertisseur numérique-analogique est non linéaire. Il vérifie la relation $Gn = KA^n$, n étant le code d'entrée du convertisseur et K et A étant des constantes.

Avantageusement le dispositif de l'invention comprend des moyens de multiplexage des grandeurs de régulation.

Dans un mode de réalisation avantageux le dispositif de l'invention comprend un circuit de mesure de niveau crête-à-crête relié aux premières entrées d'un premier et d'un second comparateurs dont les secondes entrées sont respectivement reliées aux entrées de deux commutateurs pilotés par le signal salve de référence, permettant de sélectionner un premier et un second seuil parmi deux paires de seuils. Les sorties des comparateurs sont reliées respectivement aux entrées de deux commutateurs, pilotés par le signal salve de référence, qui ont leurs premières sorties respectives reliées aux deux entrées d'un premier dispositif de contrôle horloge et leurs secondes sorties respectives reliées aux deux entrées d'un second dispositif de contrôle horloge. Le premier dispositif de contrôle horloge reçoit une première horloge et est suivi du premier compteur-décompteur. Le second dispositif de contrôle horloge reçoit une seconde horloge et est suivi du second compteur-décompteur. La sortie du premier compteur-décompteur est reliée directement à la première entrée d'un additionneur, la sortie du second compteur-décompteur est reliée à la seconde entrée de cet additionneur au travers d'un interrupteur piloté par le signal salve de référence, la sortie de cet additionneur étant reliée à l'entrée du convertisseur numérique-analogique.

Avantageusement les compteurs-décompteurs, et le convertisseur numérique-analogique sont des dispositifs à sept bits.

Le dispositif de régulation de l'amplitude signal chrominance, selon l'invention, présente les avantages suivants :

- aucun composant n'est externe au circuit intégré ;
- un seul amplificateur à gain contrôlé est nécessaire ; on obtient donc un meilleur rapport signal sur bruit ;
- les différentes constantes de temps présentent une grande souplesse de programmation ;
- une utilisation externe des informations numériques concernant le niveau de signal d'entrée est possible.

La présente invention concerne également un circuit intégré de traitement du signal chrominance comprenant le dispositif décrit ci-dessus.

Brève description des dessins

- La figure 1 illustre un premier dispositif de régulation du signal chrominance de l'art antérieur ;
- la figure 2 illustre le fonctionnement de ce dispositif de l'art antérieur ;
- la figure 3 illustre un second dispositif de régulation du signal chrominance de l'art antérieur ;

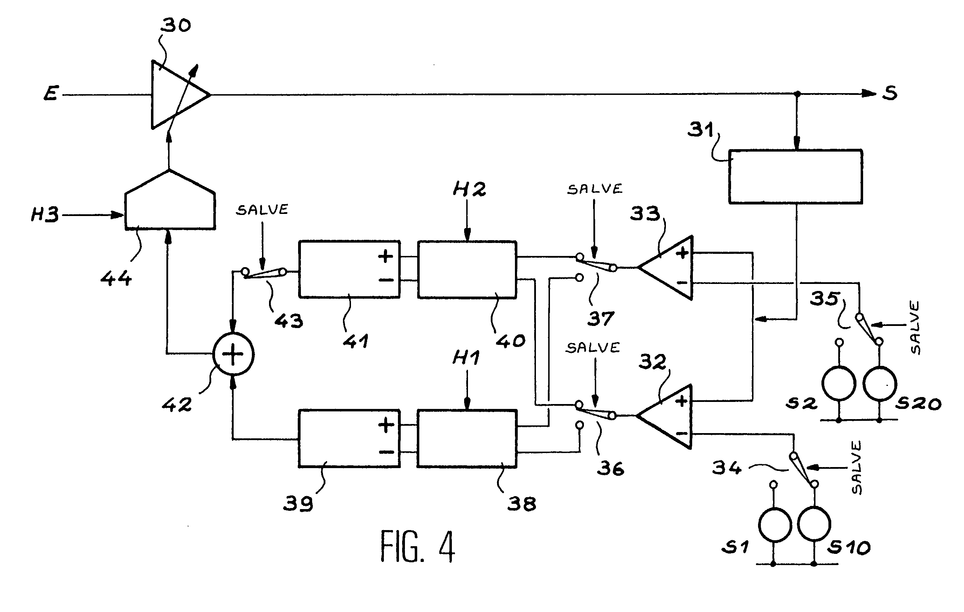

- la figure 4 illustre le dispositif de régulation du signal chrominance de l'invention.

Exposé de modes de réalisation

Dans le dispositif de régulation de chrominance de l'invention la partie contrôle des deux boucles de réglage, illustrées sur la figure 3, est réalisée en utilisant un système numérique, ce qui permet de supprimer les deux condensateurs de filtrage qui existent dans le dispositif de l'art antérieur illustré sur cette figure.

Le dispositif de l'invention comprend un amplificateur à gain variable 30 qui reçoit l'entrée de sous-porteuse E et qui délivre la sortie de sous-porteuse régulée S. Cette sortie est reliée à un circuit de mesure de niveau crête-à-crête 31 dont la sortie est reliée aux premières entrées (« + ») d'un premier et d'un second comparateurs 32 et 33.

Les secondes entrées (« - ») de ces deux comparateurs 32 et 33 sont respectivement reliées aux entrées de deux commutateurs 34, 35 pilotés par le signal salve de référence permettant de sélectionner un premier seuil (S1 ou S10) et un second seuil (S2 ou S20) parmi deux paires de seuils S1, S10 ; S2, S20. Ces deux comparateurs 32 et 33 sont reliés en sortie aux entrées de deux commutateurs 36 et 37 pilotés par le signal salve de référence.

Ces deux commutateurs 36 et 37, qui sont donc pilotés en synchronisme, ont leurs premières sorties respectives reliées aux deux entrées d'un premier dispositif de contrôle horloge 38, recevant une première horloge H1, suivi d'un premier compteur-décompteur 39 par exemple 7 bits (avec ses entrées de comptage « + » (ou « up ») et de décomptage « - » (ou « down), et leur deux secondes sorties respectives reliées aux deux entrées d'un second dispositif de contrôle horloge 40, recevant une seconde horloge H2, suivi d'un second compteur-décompteur 41 par exemple 7 bits.

La sortie du premier compteur-décompteur 39 est reliée directement à la première entrée d'un additionneur 42. La sortie du second compteur-décompteur 41 est reliée à la seconde entrée de l'additionneur 42 au travers d'un interrupteur 43 piloté par le signal salve de référence.

La sortie de l'additionneur 42 est reliée à un convertisseur numérique-analogique par exemple 7 bits, piloté par une troisième horloge H3, dont la sortie est reliée à la commande de gain de l'amplificateur 30.

Le premier dispositif de contrôle horloge 38 et le premier compteur-décompteur 39 permettent de réaliser la première boucle ou « ACC burst » telle que définie au regard de la figure 3. Le second dispositif de contrôle horloge 40 et le second compteur-décompteur 41 permettent de réaliser la seconde boucle ou « ACC overload »

Grâce au multiplexage des grandeurs de régulation S1, S10 ; S2, S20, il est donc possible de n'utiliser qu'un seul amplificateur à gain variable 30.

Comme dans un dispositif analogique classique, tel qu'illustré sur la figure 1, la sous-porteuse E à réguler traverse l'amplificateur à gain contrôlé 30. Le dispositif de mesure de l'amplitude crête-à-crête du signal 31, qui consiste par exemple, comme cela est bien connu d'un homme de métier, en une mesure de l'amplitude du signal après redressement et filtrage, délivre aux deux comparateurs 32 et 33 la grandeur à réguler.

Les références de seuil S1 (ou S10) et S2 (ou S20) définissent la valeur de consigne de cet asservissement.

Le gain maximum est obtenu pour le code 0 du convertisseur numérique-analogique 44.

On va à présent considérer les deux boucles de régulation :

<u>Première boucle de régulation de l'amplitude de la salve</u> (impulsion calibrée durant 2 ou 3 $\mu$s).

La séquence se déroule comme suit :

- mesure de l'amplitude de la salve ;
- mémorisation pendant la ligne de la valeur de cette amplitude ;
- action sur le compteur-décompeur 39 en fin de ligne juste avant la salve suivante, toutes les lignes en cas de comptage et toutes les n1 lignes en cas de décomptage.

Trois cas sont possibles :

| | |
|---|---|
| Amplitude de la salve < S1 → | il y a un décomptage du compteur-décompteur 39 toutes les n1 lignes , c'est-à-dire un envoi d'une horloge H1 sur l'entrée décomptage du compteur-décompteur 39 |
| S1 < amplitude de la salve < S2 → | il n'y a aucune action sur le compteur-décompteur 39 |
| Amplitude de la salve > S2 → | il y a un comptage du compteur-décompteur 39 toutes les lignes avec l'horloge H1, c'est-à-dire un envoi de cette horloge sur l'entrée comptage |

L'état du compteur-décompteur 39 est envoyé sur la commande de gain de l'amplificateur 30 via le convertisseur numérique-analogique 44. En régime établi la boucle régule la salve de référence telle que son amplitude soit comprise entre S1 et S2. L'horloge H3 valide les informations à l'entrée du convertisseur 44 de manière compatible avec le fonctionnement du compteur-décompteur 39.

<u>Seconde boucle de régulation de l'amplitude de la ligne (« ACC overload »)</u>

Les références S1 et S2, qui deviennent S10 et S20, définissent la nouvelle valeur de consigne de cet asservissement.

Trois cas sont possibles :

| | |
|---|---|
| Amplitude du signal ligne < S10 → | il y a un décomptage sur le compteur-décompteur 41 toutes les n2 trames |
| S10 < amplitude du signal ligne < S20 → | il n'y a aucune action sur le compteur-décompteur 41 |
| Amplitude du signal ligne > S20 → | il y a comptage sur le compteur-décompteur 41 avec une horloge rapide H2 jusqu'au franchissement du seuil S20 |

Le contenu du second compteur-décompteur 41 est additionné à celui du premier compteur-décompteur 39 de régulation de la salve. Cette régulation ligne réalise donc une correction (diminution) du gain obtenu avec la régulation de la salve.

Si la sous-porteuse (pendant la ligne) ne dépasse pas le seuil S10, la boucle de régulation ligne reste en butée (code 0) et le gain de l'amplificateur 30 conserve la même valeur pendant la ligne et la salve.

La somme des signaux en sortie des compteurs-décompteurs 39 et 41 n'est effectuée que pendant la ligne. Pendant la salve de référence, du fait de l'interrupteur 43 piloté par cette salve, le signal de sortie du compteur-décompteur 41 n'est pas présent à l'entrée de l'additionneur 42, on retrouve donc le signal de sortie du compteur-décompteur 39 en sortie de cet additionneur 42.

La première boucle, qui est la boucle principale, permet d'obtenir une valeur d'équilibre de l'amplitude de la salve de référence entre S1 et S2.

La deuxième boucle ne permet que de diminuer le gain de la première boucle, si nécessaire, en obtenant une valeur d'équilibre de l'amplitude du signal ligne entre S10 et S20.

La première boucle ne change le gain que pendant les parties non visibles du signal vidéo, alors que la seconde boucle (« AGC overload ») peut intervenir en décroissance du gain en cours de ligne (intervention rapide).

Le dispositif de l'invention asservit donc le niveau de sortie entre les seuils S1 (ou S10) et S2 (ou S20). Pour garantir la stabilité de la boucle, il faut que le changement d'état du bit de poids le plus faible à l'entrée du convertisseur numérique-analogique 44 produise un changement de niveau de sortie toujours inférieur à l'écart entre S1 (S10) et S2 (S20), et cela quel que soit le niveau du signal d'entrée.

Si Gn est le gain de l'amplificateur 30 pour le code n d'entrée du convertisseur 44, il faut donc avoir :

$$\frac{G_n}{G_{n+1}} = constante$$

Cela est obtenu avec : $G_n = K.A^n$, A et K étant des constantes.

Cette loi de variation peut être réalisée à l'aide d'un convertisseur numérique-analogique 44 non linéaire basé sur une architecture potentiométrique.

Dans un exemple de mise en oeuvre du dispositif de l'invention on a utilisé les valeurs suivantes :

1) Exemples de seuils de comparaison

| | | |
|---|---|---|
| Première boucle | : S1=148 mV | S2=152 mV |
| Seconde boucle | : S10=450 mV | S20=S10+3dB=630mV |

2) <u>Choix des fréquences d'horloge</u>

| | |
|---|---|
| H1 | 15,625 Khz pour le comptage (fréquence ligne) |
| | 488 Hz pour le décomptage (fréquence ligne divisée par 32) |
| H2 | 750 Khz pendant la ligne visible pour le comptage |
| | 25 Hz pour le décomptage |
| H3 | 750 Khz |

Compteurs et convertisseur.

Le choix d'un convertisseur et de compteurs supérieurs ou inférieurs à 7 bits sera guidé par le compromis à faire entre la précision de régulation et le coût de réalisation.

<u>REFERENCES</u>

**EP 0 959 630 B1**

[1] « Cours fondamental de télévision ; Emission-Réception-Péritélévision » de R. Besson (Editions Radio, cinquième édition, chapitre XXIII « le découpage des signaux de chrominance », pages 400 à 415)

**Revendications**

1. Dispositif de régulation de l'amplitude du signal chrominance comportant un amplificateur à gain variable (30), recevant en entrée le signal de sous-porteuse (E) et délivrant un signal de sous-porteuse régulée (S), dont le gain est contrôlé par deux boucles de régulation, la première étant une boucle de régulation pendant la durée de la salve de référence, la seconde étant une boucle de régulation pendant la ligne visible, **caractérisé en ce que** chacune de ces boucles comporte un compteur-décompteur (39, 41) piloté par une horloge (H1, H2), et **en ce qu'**il comporte un convertisseur numérique-analogique piloté par une autre horloge (H3) (44), recevant les signaux de sortie de ces premier et second compteurs-décompteurs (39, 41), dont le signal de sortie est relié à la commande de gain de l'amplificateur (30).

2. Dispositif selon la revendication 1, dans lequel le convertisseur numérique-analogique (44) est non linéaire.

3. Dispositif selon la revendication 2, dans lequel le convertisseur numérique-analogique (44) vérifie la relation $Gn=K.A^n$, Gn étant le gain de l'amplificateur, n étant le code d'entrée du convertisseur analogique-numérique (44) et A et K des constantes.

4. Dispositif selon la revendication 1, comprenant des moyens de multiplexage (34, 35) des grandeurs de régulation (S1, S10 ; S2, S20).

5. Dispositif selon la revendication 1 comprenant un circuit de mesure de niveau crête-à-crête (31) relié aux premières entrées d'un premier et d'un second comparateurs (32, 33) dont les secondes entrées sont respectivement reliées aux entrées de deux commutateurs pilotés par le signal salve de référence (34, 35), permettant de sélectionner un premier et un second seuil parmi deux paires de seuils (S1, S10 ; S2, S20), et dont les sorties sont reliées respectivement aux entrées de deux commutateurs (36, 37), pilotés par le signal salve de référence, qui ont leurs premières sorties respectives reliées aux deux entrées d'un premier dispositif de contrôle horloge (38), recevant une première horloge (H1) suivi du premier compteur-décompteur (40) et leurs secondes sorties respectives reliées aux deux entrées d'un second dispositif de contrôle horloge (40), recevant une seconde horloge (H2), suivi du second compteur-décompteur (41), la sortie du premier compteur-décompteur (39) étant reliée directement à la première entrée d'un additionneur (42), la sortie du second compteur-décompteur (41) étant reliée à la seconde entrée de cet additionneur (42) au travers d'un interrupteur (43) piloté par le signal salve de référence, la sortie de cet additionneur étant reliée à l'entrée du convertisseur numérique-analogique (44).

6. Dispositif selon la revendication 1, dans lequel les compteurs-décompteurs (39, 41), et le convertisseur numérique-analogique (44) sont des dispositifs à 7 bits.

7. Circuit intégré de traitement télévision comprenant un dispositif selon l'une quelconque des revendications précédentes.

**Claims**

1. Device for regulation of the amplitude of the chrominance signal comprising a variable gain amplifier (30), into which the sub-carrier signal (E) is input and which outputs a regulated sub-carrier signal (S), the gain of which is controlled by two regulation loops, the first being a regulation loop during the reference burst, the second being a regulation loop during the visible line, **characterized in that** each of these loops comprises a counter-discounter (39, 41) controlled by a clock (H1, H2), and **in that** it comprises a digital-analog converter controlled by another clock :(H3) (44), into which the output signals from these first and second counters-discounters (39, 41) are input, and the output signal of which is connected to the gain control of the amplifier (30).

2. Device according to claim 1, in which the digital-analog converter (44) is non-linear.

3. Device according to claim 2, in which the digital-analog converter (44) satisfies the relation $Gn = K.A^n$, where Gn is the gain of the amplifier, n is the input code to the analog-digital converter (44) and A and K are constants.

**4.** Device according to claim 1, including means (34, 35) of multiplexing regulation magnitudes (S1, S10 and S2, S20).

**5.** Device according to claim 1, comprising a circuit (31) for measuring peak-to-peak levels connected to the first inputs of first and second comparators (32, 33), the second inputs of these comparators being connected to the inputs of two switches controlled by the reference burst signal (34, 35), to select a first and second threshold from two pairs of thresholds (S1, S10 and S2, S20), the outputs of the comparators being connected to the corresponding inputs of the two switches (36, 37) controlled by the reference burst signal, the first outputs from the two switches being connected to the corresponding two inputs of a first clock control device (38) into which a first clock (H1) is input followed by the first counter-discounter (40), and their second outputs are connected to the corresponding two inputs of a second clock control device (40) into which a second clock (H2) is input followed by the second counter-discounter (41), the output from the first counter-discounter (39) being connected directly to the first input of an adder (42), the output from the second counter-discounter (41) being connected to the second input of this adder (42) through a switch (43) controlled by the reference burst signal, the output from this adder being connected to the input of the digital-analog converter (44).

**6.** Device according to claim 1, in which the counters-discounters (39, 41) and the digital-analog converter (44) are 7-bit devices.

**7.** Integrated television processing circuit comprising a device according to any one of the previous claims.

**Patentansprüche**

**1.** Vorrichtung zum Regeln der Amplitude des Chrominanzsignals, umfassend einen Verstärker mit variabler Verstärkung (30), der am Eingang das Hilfsträgersignal (E) empfängt und ein geregeltes Hilfsträgersignal (S) liefert, dessen Verstärkung durch zwei Regelschleifen gesteuert wird, wobei die erste eine Regelschleife während der Dauer des Referenzimpulses ist, und die zweite eine Regelschleife während der sichtbaren Linie ist,
**dadurch gekennzeichnet, dass** jede dieser Schleifen einen von einem Taktgeber (H1,H2) gesteuerten Vorwärts-Rückwärts-Zähler (39,41) umfasst, und dass sie (die Vorrichtung) einen D/A-Wandler umfasst, der von einem weiteren Taktgeber (H3) (44) gesteuert ist, der die Ausgangssignale dieser ersten und zweiten Vorwärts-Rückwärts-Zähler (39,41) empfängt, und dessen Ausgangssignal mit der Verstärkungssteuerung des Verstärkers (30) verbunden ist.

**2.** Vorrichtung nach Anspruch 1, wobei der D/A-Wandler (44) nicht-linear ist.

**3.** Vorrichtung nach Anspruch 2, wobei der D/A-Wandler (44) die Beziehung $Gn = K \cdot A^n$ überprüft, wobei Gn die Verstärkung des Verstärkers ist, n der Eingangscode des D/A-Wandlers (44) ist, und A und K Konstanten sind.

**4.** Vorrichtung nach Anspruch 1, mit Mitteln (34,35) zum Multiplexen der Regelgrößen (S1,S10;S2,S20).

**5.** Vorrichtung nach Anspruch 1, umfassend eine Messschaltung des Spitzenpegels (31), die mit den ersten Eingängen einer ersten und einer zweiten Vergleichsschaltung (32,33) verbunden ist, deren zweite Eingänge jeweils mit Eingängen zweier Schalter verbunden sind, welche durch das Bezugsimpulssignal (34,35) gesteuert sind, was die Auswahl eines ersten und zweiten Schwellenwerts unter zwei Schwellenwertpaaren (S1,S0;S2,S20) gestattet, und deren Ausgänge jeweils mit Eingängen zweier von dem Referenzimpulssignal gesteuerter Schalter (36,37) verbunden sind, deren erste Ausgänge jeweils mit zwei Eingängen einer ersten Taktgeber-Steuervorrichtung (38) verbunden sind, die eine erste Taktung (H1), gefolgt von einem ersten Vorwärts-Rückwärts-Zähler (40) empfangen, und deren zweite Ausgänge jeweils mit zwei Eingängen einer zweiten Taktgeber-Steuervorrichtung (40) verbunden sind, welche eine zweite Taktung (H2), gefolgt von einem zweiten Vorwärts-Rückwärts-Zähler (41) empfängt, wobei der Ausgang des ersten Vorwärts-Rückwärts-Zählers (39) direkt mit dem ersten Eingang einer Addierschaltung (42) verbunden ist, der Ausgang des zweiten Vorwärts-Rückwärts-Zählers (41) mit dem zweiten Eingang dieser Addierschaltung (42) über einen von dem Referenzimpulssignal gesteuerten Schalter (43) verbunden ist, und der Ausgang dieser Addierschaltung mit dem Eingang des D/A-Wandlers (44) verbunden ist.

**6.** Vorrichtung nach Anspruch 1, wobei die Vorwärts-Rückwärts-Schalter (39,41) und der D/A-Wandler (44) Vorrichtungen mit sieben Bits sind.

**7.** Integrierte Fernseh-Signalverarbeitungsschaltung mit einer Vorrichtung gemäß einem der vorangehenden Ansprüche.

FIG. 1

FIG. 2

LIGNE

AMPLITUDE FIXE

AMPLITUDE VARIABLE

13

FIG. 3

FIG. 4